(19) Europäisches Patentamt
European Patent Office
Office européen des brevets

(11) Publication number: **0 471 589 B1**

# (12) EUROPEAN PATENT SPECIFICATION

(45) Date of publication of patent specification: **15.11.95**

(51) Int. Cl.[6]: **C08L 83/04**, //(C08L83/04, 83:04)

(21) Application number: **91307590.9**

(22) Date of filing: **16.08.91**

## (54) Curable silicon rubber compositions and cured products.

(30) Priority: **17.08.90 JP 215763/90**

(43) Date of publication of application:
**19.02.92 Bulletin 92/08**

(45) Publication of the grant of the patent:
**15.11.95 Bulletin 95/46**

(84) Designated Contracting States:
**DE FR GB**

(56) References cited:
**EP-A- 0 326 810**
**EP-A- 0 373 941**
**EP-A- 0 420 585**
**US-A- 3 832 420**

**WORLD PATENTS INDEX LATEST Section Ch, Week 9114, 5 June 1991 Derwent Publications Ltd., London, GB; Class A, AN 91-097789 &JP-A-3 041 156 (TOSHIBA SILICONE K.K) 21 February 1991**

**PATENT ABSTRACTS OF JAPAN vol. 10, no. 362 (C-389)(2419) 4 December 1986 & JP-A-61159 450 (TOSHIBA SILICONE CO. LTD.) 19 July 1986**

(73) Proprietor: **SHIN-ETSU CHEMICAL CO., LTD.**
**6-1, Ohtemachi 2-chome**
**Chiyoda-ku**
**Tokyo (JP)**

(72) Inventor: **Inoue, Yoshio**
**No. 3-21, Isobe 4-chome**
**Annaka-shi,**
**Gunma-ken (JP)**
Inventor: **Yoshino, Masachika**
**Koufu Apt. A-4-4, No. 791-4,**
**Yanase**
**Annaka-shi,**
**Gunma-ken (JP)**
Inventor: **Tsuchida, Tomiyoshi**
**No. 1909-2, Higashikamiisobe**
**Annaka-shi,**
**Gunma-ken (JP)**
Inventor: **Hayashida, Osamu**
**Shinpu Ryo, No. 1610, Nishikamiisobe**
**Annaka-shi,**
**Gunma-ken (JP)**

**EP 0 471 589 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**PATENT ABSTRACTS OF JAPAN vol. 10, no. 362 (C-389)(2419) 4 December 1986 & JP-A-61 159 448 (TOSHIBA SILICONE CO. LTD.) 19 July 1986**

(74) Representative: **Stoner, Gerard Patrick et al**
**MEWBURN ELLIS**
**York House**
**23 Kingsway**
**London WC2B 6HP (GB)**

## Description

This invention relates to curable silicone rubber compositions and cured products thereof. More particularly, it relates to curable silicone rubber compositions containing a novel silicone powder which are amenable to rolling and extrusion and preferably cure into products having improved mechanical properties and a low coefficient of friction or improved sliding on the surface.

Silicone rubbers have many advantages including heat resistance, weathering resistance, durability, mold release, and electrical properties. They have been molded into different shapes for use in a wide variety of applications as building materials, electric and electronic parts, automobile parts, and business machine parts. In response to the widespread use of automobiles and business machines, silicone rubbers having weathering resistance, heat resistance, mold release, low compression set, and other excellent properties have been used extensively as automobile part materials and business machine (copying machines, printers, etc.) part materials. At present silicone rubbers are essential in these fields of industry. More particularly, silicone rubbers are used in fixing rolls and paper feed rolls in copying and facsimile machines by taking advantage of their nature that they are generally low in surface adherence as compared with other organic rubbers. Also attempts have been made to use silicone rubbers as automobile wipers and weather strips to take advantage of their weatherability.

Silicone polymers (raw rubbers) are generally loaded with large amounts of silica fillers to provide silicone rubber compositions having good physical properties. With increased silica filler loadings, however, cured silicone rubbers become poor in compression set. Further, since a low molecular organopolysiloxane having a silanol group at either end must be used in a sufficiently large amount to allow much silica filler to be blended, the silicone rubber composition presents a somewhat tacky surface prior to curing so that it is low in roll and extrusion processability.

Approaches for providing a non-tacky surface without sacrificing compression set are to use polymethylsilsesquioxane as one component of a silicone rubber composition as disclosed in Japanese Patent Application Kokai (JP-A) Nos. 159448/1986 and 158362/1986. These silicone rubbers are not fully satisfactory in release and anti-staining properties on their surface because the polymethylsilsesquioxane is insufficiently hydrophobic and has low affinity with a main component or siloxane.

There is a need for overcoming the above-mentioned drawbacks.

The problem addressed herein is to provide novel silicone rubber compositions and methods of making them, and preferably to provide a silicone rubber composition which has good rolling and extruding properties and cures into products having improved mechanical properties, a low coefficient of friction or smooth sliding on the surface as well as cured products thereof.

We have found that by blending (A) an organopolysiloxane of the general compositional formula (I):

$$R_aSiO_{(4-a)/2} \qquad (I)$$

wherein R is a monovalent substituted or unsubstituted hydrocarbon group as specified below, 0.0001 to 0.5 mol% of the entire R groups being an alkenyl group, and letter a is a number of from 1.95 to 2.05, having an average degree of polymerization of at least 3,000, with (B) a silicone powder containing 80 to 3 mol% of $R^1_3SiOSiO_{3/2}$ units and 20 to 97 mol% of $R^2SiO_{3/2}$ units wherein $R^1$ and $R^2$ are independently selected from monovalent substituted or unsubstituted hydrocarbon groups having 1 to 10 carbon atoms, and having a mean particle size of 0.05 to 20 $\mu$m, it is possible to obtain a curable silicone rubber composition which is well amenable to rolling and extruding operations owing to high aggregation between the components and which cures into products having good mechanical properties, release and anti-staining properties on the surface because the silicone powder has high hydrophobic nature and high affinity to the siloxane. In addition, the cured products may have a low coefficient of friction or improved slippage on the surface.

In a first aspect, the invention provides a curable silicone rubber composition comprising, in admixture,

(A) 100 parts by weight of organopolysiloxane of the general compositional formula (I)

$$R_aSiO_{(4-a)/2} \qquad (I)$$

in which

groups R are $C_{1-10}$ alkyl, alkenyl, aryl or aralkyl groups, which may have halogen atoms or cyano groups substituted for hydrogen on backbone carbon atoms, 0.0001 to 0.5mol% of groups R being alkenyl;

a is a number from 1.95 to 2.05, and

the average degree of polymerisation is at least 3000;

(B) 0.5 to 500 parts by weight of a silicone powder having a mean particle size from 0.05 to 20μm and containing

80 to 3mol% of $R^1{}_3SiOSiO_{3/2}$ units and

20 to 97mol% of $R^2SiO_{3/2}$ units, in which

groups $R^1$ and $R^2$ are selected independently from substituted and unsubstituted $C_{1-10}$ hydrocarbon groups; and

(C) a curing agent.

In a second aspect, the invention provides a silicone rubber product obtained by curing such a composition.

In a third aspect, the invention provides a method of making a silicone rubber composition comprising curing a mixture of the organopolysiloxane (A) and silicone powder (B) using a curing agent.

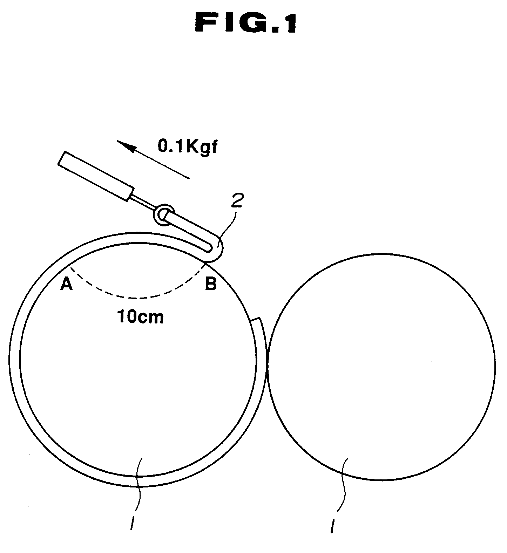

The only figure, Fig. 1 schematically illustrates a roll release test in which a silicone rubber compound is drawn from one of two rolls.

## DETAILED DESCRIPTION

A first essential component (A) in the curable silicone rubber composition of the invention is an organopolysiloxane of the general formula (I).

$$R_aSiO_{(4-a)/2} \quad (I)$$

In formula (I), groups R are monovalent substituted or unsubstituted alkyl, alkenyl, aryl or aralkyl groups having 1 to 10 carbon atoms, more preferably 1 to 8 carbon atoms, provided that 0.0001 to 0.5 mol%, preferably 0.001 to 0.5 mol%, more preferably 0.01 to 0.3 mol% of the entire R groups are alkenyl groups. An alkenyl content of less than 0.0001 mol% would cause the organopolysiloxane to cure poorly whereas an alkenyl content of more than 0.5 mol% would result in unsatisfactory cured products. The hydrocarbon groups represented by R include alkenyl groups such as vinyl, allyl, butenyl, and hexenyl groups; alkyl groups such as methyl, ethyl, propyl, butyl, pentyl, hexyl, octyl and decyl groups; aryl groups such as phenyl and tolyl groups; aralkyl groups such as benzyl and β-phenylethyl groups; and substituted ones of these groups e.g. in which some or all of the hydrogen atoms attached to backbone carbon atoms are replaced by halogen atoms (e.g., fluorine) and cyano groups, such as 3,3,3-trifluoropropyl and cyanoethyl groups.

Most often, the non-alkenyl R group is alkyl group, particularly at least mainly methyl group. Where low-temperature resistance, radiation resistance and transparency are required, it is preferred to include up to 20 mol% of phenyl group based on the entire R groups. To meet the requirements of oil and gasoline resistance, inclusion of a cyanoethyl and/or 3,3,3-trifluoropropyl group as the R group is recommended.

In formula (I), letter a is a number of from 1.95 to 2.05. With a values of less than 1.95, it is difficult to synthesize an organopolysiloxane having a degree of polymerization of at least 3,000. With a values of more than 2.05, it is difficult to consistently synthesize an organopolysiloxane having a degree of polymerization of at least 3,000 in a reproducible manner.

The organopolysiloxane of formula (I) has an average degree of polymerization of at least 3,000, preferably 3,000 to 10,000, more preferably 5,000 to 10,000.

The organopolysiloxane used herein is usually a linear diorganopolysiloxane consisting essentially of diorganosiloxane units while it may contain minor amounts of triorganosiloxy, monoorganosiloxy, and $SiO_2$ units and be blocked with a hydroxyl or triorganosiloxy unit at its molecular chain end.

A second essential component (B) of the present composition is a silicone powder containing $R^1_3$ $SiOSiO_{3/2}$ and $R^2SiO_{3/2}$ units.

In the units, $R^1$ and $R^2$, which may be the same or different, are independently selected from a monovalent substituted or unsubstituted hydrocarbon group having 1 to 10 carbon atoms, preferably 1 to 6 carbon atoms, for example, methyl, vinyl, phenyl, and 3,3,3-trifluoropropyl groups.

The silicone powder contains 80 to 3 mol%, preferably 50 to 5 mol% of $R^1_3$ $SiOSiO_{3/2}$ units and 20 to 97 mol%, preferably 50 to 95 mol% of $R^2SiO_{3/2}$ units based on the entire silicone powder. If more than 80 mol% of $R^1_3$ $SiOSiO_{3/2}$ units is present, the resulting silicone powder loses sphericity and provides cured silicone rubber having an increased coefficient of friction. If the $R^1_3$ $SiOSiO_{3/2}$ unit content is less than 3 mol%, the resulting silicone powder loses some affinity with the base siloxane and scarcely improves rolling and extruding amenability.

The silicone powder has a mean particle size of 0.05 to 20 μm, preferably 0.05 to 10 μm. Particles with a size of less than 0.05 μm are difficult to manufacture whereas particles of more than 20 μm in size are

less effective for reinforcement and surface friction reduction.

The silicone powder used herein may be obtained by slowly adding dropwise silicon reactants $R^1_3$, $SiOSi(OR^3)_3$ and $R^2Si(OR^3)_3$ wherein $R^1$ and $R^2$ are as defined above, and $R^3$ is an alkyl group having 1 to 4 carbon atoms or an alkoxysubstituted alkyl group having 2 to 6 carbon atoms to an aqueous ammonia, thereby causing hydrolysis and condensation. However, more hydrophobic and more spherical particles are obtained by reacting the silicon reactants with an aqueous solution of an organic carboxylic acid to form a homogeneous solution, and then adding the solution dropwise to an aqueous solution of ammonia or amine (monoethylamine, diethylamine, triethylamine, ethylenediamine, tetramethylethylenediamine, etc.) or an aqueous solution of an alkaline earth metal hydroxide (calcium hydroxide, barium hydroxide, etc.) or alkali metal carbonate (potassium carbonate, sodium carbonate, etc.), thereby causing hydrolysis and condensation. The resulting particles have a smaller particle size, a narrower size distribution, and higher hydrophobic nature so that they may impart greater aggregation to the silicone rubber composition to further improve rolling and extruding operations.

0.5 to 500 parts, preferably 1 to 200 parts by weight, of silicone powder (B) is blended with 100 parts by weight of organopolysiloxane (A). Less than 0.5 parts by weight of silicone powder (B) would be too small to improve the surface frictional and release properties of silicone rubber whereas in excess of 500 parts by weight of silicone powder (B), the resulting silicone rubber would experience a loss of mechanical strength.

The silicone rubber compositions of the present invention may be cured in the presence of an organic peroxide catalyst or by utilizing hydrosilation reaction. Therefore, a curing catalyst suitable for a particular curing method should be blended.

The organic peroxide catalyst system is first described. Preferably, 0.05 to 15 parts by weight of an organic peroxide catalyst is blended per 100 parts by weight of the organopolysiloxane and the composition is heated at 100 to 300 °C for 1 minute to 5 hours for curing. The organic peroxide catalyst may be any desired one of such catalysts commonly used for peroxide curing type silicone rubbers, for example, benzoyl peroxide, bis(2,4-dichlorobenzoyl) peroxide, di-t-butyl peroxide, 2,5-dimethyl-di-t-butylperoxyhexane, t-butylperbenzoate, t-butylperoxyisopropylcarbonate, and dicumyl peroxide alone or in admixture of two or more.

Where the composition is cured through hydrosilation reaction, the preferred curing agent is a combination of an organohydrogenpolysiloxane and a platinum group metal catalyst. The organohydrogenpolysiloxane may be selected from linear, cyclic and branched organopolysiloxanes having two or more SiH groups in a molecule.

The preferred organohydrogenpolysiloxane may have the following general formula:

$$(R^3)_b(H)_cSiO_{\frac{4-b-c}{2}}$$

wherein $R^3$ represents a substituted or unsubstituted monovalent hydrocarbon group having 1 to 10 carbon atoms such as an alkyl group and an aryl group, and $0 \leqq b \leqq 3$, $0.005 \leqq c \leqq 1.0$ and $0.8 \leqq b + c \leqq 3$.

The SiH groups may be attached to the polysiloxane chain at its terminal or at any intermediate positions. The organohydrogenpolysiloxane is preferably used in such amounts to give 0.5 to 5 mol, especially 1 to 3 mol of SiH group per mol of the alkenyl group of organopolysiloxane (A). The platinum group metal catalyst used at the same time is to catalyze the hydrosilation of an alkenyl group in organopolysiloxane (A) with an SiH group in the organohydrogenpolysiloxane. Preferably, the catalyst is used in an amount of 0.1 to 1,000 parts, especially 1 to 100 parts by weight per million parts by weight of the organopolysiloxane (A) and the organohydrogenpolysiloxane combined, calculated as elemental platinum. Suitable platinum group metal catalysts are powder metallic platinum catalysts as disclosed in U.S. Patent No. 2,970,150 (Bailey), chloroplatinic acid catalysts as disclosed in U.S. Patent No. 2,823,218 (Sperier et al.), platinum-hydrocarbon complexes as disclosed in U.S. Patent Nos. 3,159,601 (Ashby) and 3,159,662, chloroplatinic acid-olefin complexes as disclosed in U.S. Patent No. 3,516,946, platinum-vinyl siloxane complexes as disclosed in U.S. Patent Nos. 3,775,452 (Karstedt) and 3,814,730.

In the hydrosilation curing system, a reaction control agent such as methylvinyl-cyclotetrasiloxane and acetylene alcohol may be added for maintaining shelf stability at room temperature and obtaining an appropriate pot life. Preferably, hydrosilation curing is accomplished by heating at a temperature of 60 to 400 °C for 1 minute to 5 hours.

The compositions may further contain additives and fillers commonly used in silicone rubbers. Such fillers include fumed silica, precipitated silica, ground silica, diatomaceous earth, iron oxide, zinc oxide, titanium oxide, carbon black, barium oxide, magnesium oxide, cerium hydroxide, calcium carbonate, magnesium carbonate, zinc carbonate, asbestos, glass wool, pulverized mica, and fused silica powder. Other useful additives are pigments, dyes, antioxidants, antistatic agents, flame retardants (e.g., antimony oxide and chlorinated paraffin), heat conduction modifiers (e.g., boron nitride and aluminum oxide), reaction control agents, mold release agents, and filler dispersants. Exemplary of the filler dispersants are diphenylsilane diol, various alkoxysilanes, carbon functional silanes, and silanol-containing monomeric siloxanes.

In this manner, we have made curable silicone rubber compositions which cure into products having improved mechanical properties, smooth surface release, and a low coefficient of friction on the surface so that they are best suited in applications where release and low friction features are required, for example, fixing and paper feed rollers in copying and facsimile machines, wipers and weather strips in automobiles, and the like. Due to increased aggregating force, the silicone rubber compositions were found to be amenable to rolling and extruding operations so that they are useful as extrusion molded parts such as building gaskets, facsimile machine rolls, medical tubes and the like. The compositions will also find applications as rubber contacts, nipples, even speed joint boots, plug boots, anode caps, electrical cables, and the like.

## EXAMPLE

Examples of the invention are given below by way of illustration and not by way of limitation. All parts are by weight.

### Example 1 and Comparative Example 1

A silicone rubber composition I was obtained by blending 100 parts of an organopolysiloxane raw rubber consisting of 99.825 mol% of dimethylsiloxane $(CH_3)_2SiO$ units, 0.15 mol% of methylvinylsiloxane $(CH_2=CH)(CH_3)SiO$ units, and 0.025 mol% of dimethylvinylsiloxy $(CH_2=CH)(CH_3)_2SiO_{1/2}$ units and having an average degree of polymerization of 8,000 with 30 parts of a silicone powder I consisting of 20 mol% of $(CH_3)_3SiOSiO_{3/2}$ units and 80 mol% of $CH_3SiO_{3/2}$ units and having a mean particle size of 0.8 $\mu$m.

For comparison purposes, a silicone rubber composition II was obtained by the same procedure as above, but using instead of silicone powder I, 30 parts a silicone powder II consisting of 100 mol% of $CH_3SiO_{3/2}$ units and having a mean particle size of 1.0 $\mu$m.

Compositions I and II were examined for roll release by the following test.

### Roll release test

A twin roll mill is shown in FIG. 1 as comprising two rolls 1 and 1 having a diameter of 152 mm (6 inches) and spaced 2 mm from each other. Each of compositions I and II, 100 grams, was milled for 3 minutes between the rolls, deaerated for 1 minute, and then kept there for 3 minutes while rotating the rolls. After the rolls ceased to rotate, a milled compound layer 2 was drawn with a force of 1 N (0.1 kgf) in a tangential direction to the roll surface. The time taken to peel the compound layer over an arc A-B of 10 cm was measured. The shorter the peeling time, the greater is the roll release.

Each of compositions I and II, 100 grams, was blended with 0.5 grams of 2,5-dimethyl-2,5-di-t-butylperoxyhexane by means of a twin roll mill at room temperature, dispensed, press cured at 165 °C for 10 minutes, and post cured at 200 °C for 4 hours, obtaining a rolled sheet.

The sheet was measured for coefficient of dynamic friction on the surface according to ASTM D-1894-78 and for mechanical properties according to JIS K-6301.

The results are shown in Table 1.

Table 1

| | Example 1 | Comparative Example 1 |
|---|---|---|
| Composition | I | II |
| Roll release, sec. | 10.3 | 18.2 |
| Hardness (JIS−A) | 32 | 30 |
| Elongation, % | 280 | 230 |
| Tensile strength, $kg/mm^2$ | 15 | 12 |
| Coefficient of friction | 0.30 | 0.42 |

As is evident from Table 1, a silicone rubber composition having an organopolysiloxane of formula (I) blended with a specific silicone powder within the scope of the invention (Example 1) is smoothly released from the milling rolls and cures into a product having good mechanical properties and a low coefficient of friction as compared with a silicone rubber composition having a different silicone powder blended (Comparative Example 1).

Examples 2-3 and Comparative Example 2

A base compound A was prepared by blending 100 parts of an organopolysiloxane raw rubber consisting of 99.825 mol% of dimethylsiloxane $(CH_3)_2SiO$ units, 0.15 mol% of methylvinylsiloxane $(CH_2=CH)(CH_3)SiO$ units, and 0.025 mol% of dimethylvinylsiloxy $(CH_2=CH)(CH_3)_2SiO_{1/2}$ units and having an average degree of polymerization of 8,000 with 2 parts of an organosiloxane having the average compositional formula:

$HO(CH_3)_2Si(OSi(CH_3)_2)_{10}(OSiCH_3OH)_4OSi(CH_3)_2OH$,

25 parts of Aerosil R972 (hydrophobic fumed silica manufactured by DeGussa A.G., Germany), and 20 parts of Crystallite VXS (quartz powder manufactured by Tatsumori K.K., Japan), and milling the mixture by means of a kneader, followed by heat treatment at 150°C for 2 hours.

Silicone rubber compositions III to VI were obtained by adding 20 parts of different silicone fine powders to 100 parts of base compound A and milling the mixtures by means of a kneader.

| | |
|---|---|
| Silicone powder III | mean particle size 1.1 μm |
| $(CH_3)_3SiOSiO_{3/2}$ unit | 3 mol% |
| $CH_3SiO_{3/2}$ unit | 97 mol% |
| Silicone powder IV | mean particle size 1.0 μm |
| $(CH_2{=}CH)(CH_3)_3SiOSiO_{3/2}$ unit | 2 mol% |
| $(CH_3)_3SiOSiO_{3/2}$ unit | 8 mol% |
| $CH_3SiO_{3/2}$ unit | 90 mol% |
| Silicone powder V | mean particle size 0.8 μm |
| $(CH_3)_3SiOSiO_{3/2}$ unit | 20 mol% |
| $CH_3SiO_{3/2}$ unit | 80 mol% |
| Silicone powder VI | mean particle size 1.4 μm |
| $(CH_3)_3SiOSiO_{3/2}$ unit | 50 mol% |
| $CH_3SiO_{3/2}$ unit | 50 mol% |

Silicone rubber composition VII was obtained by adding 20 parts of silicone powder VII to 100 parts of base compound A and milling the mixture by means of a kneader.

| | |
|---|---|
| Silicone powder VII | mean particle size 3.5 μm |
| $CH_3SiO_{3/2}$ unit | 100 mol% |

To 100 parts of each of compositions III to VII were added 0.03 parts of an octyl alcohol modified solution of chloroplatinic acid (platinum 1 wt%), 0.25 parts of 1,3,5,7-tetramethyl-1,3,5,7-tetravinylcyclotrisiloxane, and 1.20 parts of a crosslinking agent of the following average structural formula.

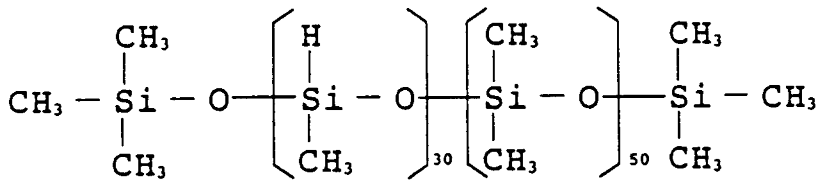

The blends were press vulcanized at 170 °C for 10 minutes, post vulcanized at 200 °C for 4 hours, and then measured for coefficient of dynamic friction on the surface according to ASTM D-1894-78 and for mechanical properties according to JIS K-6301.

Each of the compounds III to VII having the vulcanizing agents added thereto was fed to an extruder equipped with a cylinder having a diameter of 40 mm and a length-to-diameter L/D ratio of 12 and a die having an orifice diameter of 10 mm and continuously extruded at room temperature (15-30 °C) into a rod having an outer diameter of 8 mm at a rate of 1 m/min. The extruded silicone rubber rod was passed at a rate of 1 m/min. through a heating oven having an overall length of 2 m where hot air at 300 °C was circulated. Extrusion moldability was evaluated "Pass" when the extrudate maintained its shape so that a cylindrical molded rod was obtained and "Rejected" when the extrudate could not maintain its shape, failing to produce a molded rod.

The results are shown in Table 2.

Table 2

| | Examples | | | | |
|---|---|---|---|---|---|
| | E2 | E3 | E4 | E5 | CE2 |
| Composition | III | IV | V | VI | VII |
| Roll release, sec. | 21.5 | 20.8 | 18.0 | 22.4 | 38.3 |
| Hardness (JIS-A) | 48 | 50 | 48 | 49 | 49 |
| Elongation, % | 330 | 320 | 340 | 320 | 330 |
| Tensile strength, $kg/mm^2$ | 55 | 60 | 60 | 50 | 55 |
| Coefficient of friction | 0.4 | 0.4 | 0.3 | 0.4 | 0.8 |
| Extrusion molding | Pass | Pass | Pass | Pass | Rejected |

As is evident from Table 2, the curable silicone rubber compositions within the scope of the present invention (Examples 2 to 5) were satisfactory in roll release, extrusion moldability, mechanical properties, and surface friction or sliding.

Although some preferred embodiments have been described, many modifications and variations may be made thereto in the light of the above teachings. It is therefore to be understood that within the scope of the appended claims, the invention may be practised otherwise than as specifically described.

## Claims

**1.** A curable silicone rubber composition comprising, in admixture,

(A) 100 parts by weight of organopolysiloxane of the general compositional formula (I)

$R_aSiO_{(4-a)/2}$ (I)

in which

groups R are $C_{1-10}$ alkyl, alkenyl, aryl or aralkyl groups, which may have halogen atoms or cyano groups substituted for hydrogen on backbone carbon atoms, 0.0001 to 0.5mol% of groups R being alkenyl;

a is a number from 1.95 to 2.05, and

the average degree of polymerisation is at least 3000;
(B) 0.5 to 500 parts by weight of a silicone powder having a mean particle size from 0.05 to 20μm and containing
80 to 3mol% of $R^1{}_3SiOSiO_{3/2}$ units and
20 to 97mol% of $R^2SiO_{3/2}$ units, in which
groups $R^1$ and $R^2$ are selected independently from substituted and unsubstituted $C_{1-10}$ hydrocarbon groups; and
(C) a curing agent.

**2.** A composition according to claim 1 in which groups R in formula (I) are $C_{1-8}$.

**3.** A composition according to claim 1 or claim 2 in which those groups R in formula (I) which are not alkenyl are at least mainly methyl.

**4.** A composition according to any one of the preceding claims in which those groups R in formula (I) which are not alkenyl include phenyl groups, up to 20mol%.

**5.** A composition according to any one of the preceding claims in which those groups R in formula (I) which are not alkenyl include cyanoethyl and/or 3,3,3-trifluoropropyl groups.

**6.** A composition according to any one of the preceding claims in which in formula (I) from 0.01 to 0.3mol% of groups R are alkenyl.

**7.** A composition according to any one of the preceding claims in which the average degree of polymerisation of organopolysiloxane (A) is from 5000 to 10000.

**8.** A composition according to any one of the preceding claims in which groups $R^1$ and $R^2$ are selected from substituted and unsubstituted $C_{1-6}$ hydrocarbon groups.

**9.** A composition according to claim 8 in which $R^1$ and $R^2$ are selected from methyl, vinyl, phenyl and 3,3,3-trifluoropropyl.

**10.** A composition according to any one of the preceding claims in which 1 to 200 parts by weight of silicone powder (B) are used for 100 parts by weight of organopolysiloxane (A).

**11.** A composition according to any one of the preceding claims in which the curing agent is an organic peroxide.

**12.** A composition according to any one of claims 1 to 11 in which the curing agent is an organohydrogenpolysiloxane combined with a platinum-group metal catalyst, to effect curing by hydrosilation.

**13.** A silicone rubber product obtained by curing a composition according to any one of the preceding claims.

**14.** A silicone rubber product according to claim 13 which is a fixing or paper feed roller for a copier or facsimile machine, or an automobile wiper or weather strip.

**15.** A silicone rubber product according to claim 13 which is an extrusion-moulded part.

**16.** A method of making a silicone rubber composition comprising curing a mixture of organopolysiloxane (A) and silicone powder (B) as defined in any one of claims 1 to 10, using a curing agent.

**Patentansprüche**

**1.** Härtbare Silikonkautschuk-Zusammensetzung, umfassend in Mischung:
(A) 100 Gew.-Teile Organopolysiloxan der allgemeinen Zusammensetzungsformel (I):

$R_aSiO_{(4-a)/2}$ (I)

worin:
Gruppen R $C_{1-10}$-Alkyl-, Alkenyl-, Aryl- oder Aralkylgruppen sind, die Halogenatome oder Cyanogruppen aufweisen können, die für Wasserstoff auf Rückgrat-Kohlenstoffatomen substituiert sind, wobei 0,0001 bis 0,5 Mol-% der Gruppen R Alkenyl sind;
a eine Zahl von 1,95 bis 2,05 ist, und
der durchschnittliche Polymerisationsgrad zumindest 3000 beträgt;
(B) 0,5 bis 500 Gew.-Teile eines Silikonpulvers mit einer mittleren Teilchengröße von 0,05 bis 20 µm und enthaltend:
80 bis 3 Mol-% $R^1{}_3SiOSiO_{3/2}$-Einheiten und
20 bis 97 Mol-% $R^2SiO_{3/2}$-Einheiten, worin
Gruppen $R^1$ und $R^2$ unabhängig voneinander aus substituierten und nichtsubstituierten $C_{1-10}$-Kohlenwasserstoffgruppen ausgewählt sind; und
(C) ein Härtungsmittel.

**2.** Zusammensetzung nach Anspruch 1, worin Gruppen R in Formel (I) $C_{1-8}$ sind.

**3.** Zusammensetzung nach Anspruch 1 oder 2, worin jene Gruppen R in Formel (I), die nicht Alkenyl sind, zumindest hauptsächlich Methyl sind.

**4.** Zusammensetzung nach einem der vorhergehenden Ansprüche, worin jene Gruppen R in Formel (I), die nicht Alkenyl sind, bis zu 20 Mol-% Phenylgruppen enthalten.

**5.** Zusammensetzung nach einem der vorhergehenden Ansprüche, worin jene Gruppen R in Formel (I), die nicht Alkenyl sind, Cyanoethyl- und/oder 3,3,3-Trifluorpropylgruppen enthalten.

**6.** Zusammensetzung nach einem der vorhergehenden Ansprüche, worin in Formel (I) 0,01 bis 0,3 Mol-% der Gruppen R Alkenyl sind.

**7.** Zusammensetzung nach einem der vorhergehenden Ansprüche, worin der durchschnittliche Polymerisationsgrad von Organopolysiloxan (A) zwischen 5000 und 10.000 liegt.

**8.** Zusammensetzung nach einem der vorhergehenden Ansprüche, worin Gruppen $R^1$ und $R^2$ aus substituierten und unsubstituierten $C_{1-6}$-Kohlenwasserstoffgruppen ausgewählt sind.

**9.** Zusammensetzung nach Anspruch 8, worin $R^1$ und $R^2$ aus Methyl, Vinyl, Phenyl und 3,3,3-Trifluorpropyl ausgewählt sind.

**10.** Zusammensetzung nach einem der vorhergehenden Ansprüche, worin 1 bis 200 Gew.-Teile Silikonpulver (B) pro 100 Gew.-Teile Organopolysiloxan (A) verwendet werden.

**11.** Zusammensetzung nach einem der Ansprüche 1 bis 11, worin das Härtungsmittel ein organisches Peroxid ist.

**12.** Zusammensetzung nach einem der vorhergehenden Ansprüche, worin das Härtungsmittel ein Organohydrogen-Polysiloxan kombiniert mit einem Platingruppen-Metallkatalysator ist, um eine Härtung durch Hydrosilierung zu erzielen.

**13.** Silikonkautschuk-Produkt, das durch Härten einer Zusammensetzung nach einem der vorhergehenden Ansprüche erhalten wird.

**14.** Silikonkautschuk-Produkt nach Anspruch 13, das eine Fixierungs- oder Papierzufuhrwalze für ein Kopier- oder Faxgerät bzw. für einen Scheibenwischer oder Tür- und Fenstergummi eines Fahrzeugs ist.

**15.** Silikonkautschuk-Produkt nach Anspruch 13, das ein extrusionsgeformter Teil ist.

16. Verfahren zur Herstellung einer Silikonkautschuk-Zusammensetzung, umfassend das Härten eines Gemisches aus Organopolysiloxan (A) und einem Silikonpulver (B) nach einem der Ansprüche 1 bis 10 unter Verwendung eines Härters.

## Revendications

1. Composition de caoutchouc de silicone durcissable comprenant, en mélange,
(A) 100 parties en poids d'organopolysiloxane ayant la formule (I) de composition générale

$$R_aSiO_{(4-a)/2} \qquad (I)$$

dans laquelle
les groupes R sont des groupes alkyle, alkényle, aryle ou aralkyle en $C_{1-10}$, qui peuvent avoir des atomes d'halogène ou des groupes cyano substitués à un hydrogène sur les atomes de carbone du squelette, 0,0001 à 0,5% en moles des groupes R étant un alkényle ;
a est un nombre valant de 1,95 à 2,05, et
le degré moyen de polymérisation est d'au moins 3000 ;
(B) 0,5 à 500 parties en poids d'une poudre de silicone ayant une taille moyenne de particule de 0,005 à 20 µm et contenant
80 à 3% en moles d'unités $R^1_3SiOSiO_{3/2}$ et
20 à 97% en modes d'unités $R_2SiO_{3/2}$,où
les groupes $R^1$ et $R^2$ sont choisis indépendamment parmi des groupes hydrocarbures en $C_{1-10}$ substitués et non susbtitués; et
(C) un agent de durcissement.

2. Composition selon la revendication 1, dans laquelle les groupes R dans la formule (I) sont en $C_{1-8}$.

3. Composition selon la revendication 1 ou 2, dans laquelle ces groupes R dans la formule (I) qui ne sont pas un alkényle sont au moins principalement un méthyle.

4. Composition selon l'une quelconque des revendications précédentes, dans laquelle ces groupes R dans la formule (I) qui ne sont pas un alkényle incluent des groupes phényle, jusqu'à 20% en modes.

5. Composition selon l'une quelconque des revendications précédentes,dans laquelle ces groupes R dans la formule (I) qui ne sont pas un alkényle incluent des groupes cyanoéthyle et/ou des 3,3,3-trifluoropropyle.

6. Composition selon l'une quelconque des revendications précédentes, dans laquelle dans la formule (I) de 0,01 à 0,3% en moles des groupes R sont un alkényle.

7. Composition selon l'une quelconque des revendications précédentes, dans laquelle le degré moyen de polymérisation de l'organopolysiloxane (A) est de 5000 à 10 000.

8. Composition selon l'une quelconque des revendications précédentes, dans laquelle les groupes $R^1$ et $R^2$ sont choisis parmi des groupes hydrocarbures en $C_{1-6}$ substitués et non substitués.

9. Composition selon la revendication 8, dans laquelle $R^1$ et $R^2$ sont choisis parmi un méthyle, vinyle, phényle et 3,3,3-trifluoropropyle.

10. Composition selon l'une quelconque des revendications précédentes, dans laquelle 1 à 200 parties en poids de poudre (B) de silicone sont utilisées pour 100 parties en poids d'organopolysiloxane (A).

11. Composition selon l'une quelconque des revendications précédentes, dans laquelle l'agent de durcissement est un peroxyde organique.

12. Composition selon l'une quelconque des revendications 1 à 11, dans laquelle l'agent de durcissement est un organohydrogénopolysiloxane combiné avec un catalyseur métallique du groupe du platine, pour effectuer le durcissement par hydrosilation.

**13.** Produit en caoutchouc de silicone obtenu par durcissement d'une composition selon l'une quelconque des revendications précédentes.

**14.** Produit en caoutchouc de silicone selon la revendication 13, qui est un rouleau de fixation ou d'alimentation de papier pour une machine copieuse ou de fac-similés ou d'essuie-glace d'automobile ou de gouttière d'étancheité.

**15.** Produit en caoutchouc de silicone selon la revendication 13 qui est une partie moulée par extrusion.

**16.** Méthode de fabrication d'une composition de caoutchouc de silicone comprenant le durcissement d'un mélange d'un organopolysiloxane (A) et d'une poudre (B) de silicone comme définie dans l'une quelconque des revendications 1 à 10, en utilisant un agent de polymérisation.

FIG.1